# EUROPÄISCHE PATENTSCHRIFT

(11) **EP 2 424 755 B1**
(45) Veröffentlichungstag und Bekanntmachung des Hinweises auf die Patenterteilung: **17.07.2013**
(21) Anmeldenummer: 10707296.9
(22) Anmeldetag: 10.03.2010
(51) Int. Cl.: B60S 1/40, B60S 1/38

(54) **ANSCHLUSSVORRICHTUNG ZUM GELENKIGEN VERBINDEN EINES MIT EINEM WISCHARM FEST VERBUNDENEN VERBINDUNGSELEMENTS**
CONNECTING APPARATUS FOR HINGING A JOINING ELEMENT RIGIDLY CONNECTED TO A WIPER ARM
DISPOSITIF DE RACCORDEMENT, DESTINE A RELIER DE MANIERE ARTICULEE UN ELEMENT DE LIAISON SOLIDAIRE D'UN BRAS D'ESSUIE-GLACE

(30) Priorität: 30.04.2009 DE 102009002764
(43) Veröffentlichungstag der Anmeldung: 07.03.2012
(73) Patentinhaber: Robert Bosch GmbH, 70442 Stuttgart (DE)
(72) Erfinder: DEPONDT, Helmut, B-3001 Heverlee (BE)
(86) Internationale Anmeldenummer: PCT/EP2010/053002
(87) Internationale Veröffentlichungsnummer: WO 2010/124896

(56) Entgegenhaltungen:
- EP-A1- 1 849 666
- EP-A2- 1 995 130
- EP-A2- 2 143 603
- WO-A1-2009/133979
- WO-A1-2010/028866
- DE-A1- 10 349 637
- DE-U1-202005 021 307

## Beschreibung

### Stand der Technik

Die Erfindung geht von einer Anschlussvorrichtung aus zum gelenkigen Verbinden eines mit einem Wischarm fest verbundenen Verbindungselements nach dem Oberbegriff des Anspruchs 1.

Aus der DE 20 2005 021 307 U1 ist eine Anschlussvorrichtung zum gelenkigen Verbinden eines Wischblatts in Flachbalkenbauweise bekannt, die für verschiedene Wischarme geeignet ist. Die Anschlussvorrichtung umfasst mindestens ein einteiliges oder mehrteiliges Anschlusselement, das fest, aber lösbar mit einem Tragelement in Form von Federschienen befestigt ist. Zwischen je einem Wischarm und dem Wischblatt ist ein Adapter vorgesehen, der einerseits Anschlussmöglichkeiten für das Anschlusselement und andererseits Anschlussmöglichkeiten für einen der Wischarme bzw. für Verbindungselemente besitzt, die mit dem jeweiligen Wischarm fest verbunden oder an diesem angeformt sind. Ein Gelenk, dessen Gelenksachse sich quer zur Längsrichtung des Wischblatts erstreckt, ist zwischen einem der Verbindungselemente und einem Adapter angeordnet, der drehfest mit dem Anschlusselement verbunden ist, oder zwischen einem mit dem Anschlusselement drehfest verbundenen Teil des Adapters und einem mit dem Verbindungselement drehfest verbundenen Teil des Adapters. Somit ergeben sich für drei verschiedene Verbindungselemente der Wischarme drei verschiedene Adapter.

Die Anschlussvorrichtung eignet sich für einen Wischarm mit einem hakenförmigen Ende bzw. Verbindungselement oder einem Ende bzw. Verbindungselement mit einem seitlichen Lagerstift und einer Brücke entsprechend einem bekannten Sidelockprinzip oder einem Wischarm mit einem Ende bzw. Verbindungselement, bei dem der Wischarm im Wesentlichen gradlinig oberhalb des Wischblatts verläuft und nach dem Toplock-Prinzip mit dem Anschlusselement verbunden ist. Eine andere Anschlussvorrichtung zum gelenkigen Verbinden eines Wischblatts mit einem Wischarm ist aus der DE 103 47 637 A1 bekannt. Hierbei besitzt ein Anschlusselement in Form einer Blechkralle einen mittleren Längssteg, der vom Tragelement des Wischblatts weg weist, und in den eine quer verlaufende Schwenkachse drehfest eingesetzt ist. Auf der zu beiden Seiten des Längsstegs fliegend vorstehenden Schwenkachse ist ein Adapter mit Lageröffnungen schwenkbar gelagert, die in seitlichen Federzungen angeordnet sind. Der Adapter, der aus Kunststoff gefertigt ist, umfasst die Blechkralle von außen und wird mittels Rastelementen und Halteelementen in ein zum Wischblatt hin offenes Verbindungselement eingeklippst, das fest mit dem Wischarm verbunden ist. Der Adapter ist zum einen durch innere Führungsstege seitlich auf der Blechkralle geführt und zum anderen an seinen Seitenwänden spielfrei im Verbindungselement eingesetzt. Zum Fixieren des Adapters im Verbindungselement dient eine Taste, die am Ende einer Federzunge in einer Deckwand des Adapters vorgesehen ist und im montierten Zustand in ein passendes Rastloch einer Deckwand des Verbindungselements einrastet.

Aus der DE 10 2006 031 514 A1 ist ein Wischblatt für Scheiben von Kraftfahrzeugen bekannt, das im mittleren Bereich ein Anschlusselement zum gelenkigen Verbinden mit einem Wischarm aufweist. Das Anschlusselement umfasst ein Grundelement, das aus zwei Seitenteilen zusammengesetzt ist, die einander zugewandte offene Längsnuten aufweisen. Mit diesen sitzen sie auf als Tragelement dienenden Federschienen, die in seitlichen Längsnuten einer Wischleiste teilweise eingebettet sind und zumindest im Bereich des Anschlusselements ein Stück weit seitlich aus den Längsnuten vorstehen. Die Längsnuten des Grundelements werden nach unten durch einen unteren Schenkel und nach oben durch einen oberen Schenkel begrenzt. An den oberen Schenkel ist in einem Endbereich ein Vorsprung und im anderen Endbereich eine Aussparung angeordnet, die jeweils zum gegenüberliegenden Seitenteil gerichtet sind. Der Vorsprung des einen Seitenteils passt in die Aussparung des anderen Seitenteils und umgekehrt. In montiertem Zustand fixieren die Vorsprünge in den Aussparungen die Seitenteile in Längsrichtung zueinander und definieren den Abstand der Längsnuten quer zum Wischblatt. Auf einer Seite eines jeden Vorsprungs bzw. einer jeden Aussparung befinden sich jeweils zwei zur Längsrichtung geneigt verlaufende Anlageflächen, wobei die Anlageflächen an dem Vorsprung eine konvexe Dachfläche bilden, die in eine konkave Dachfläche passt, die von den Anlageflächen an den Aussparungen gebildet wird. Somit sind die Seitenteile in Richtung der Hochachse verriegelt.

Auf den den Anlageflächen gegenüberliegenden Seiten der Aussparung ist ein Rasthaken vorgesehen, der bei der Montage in eine Rastvertiefung an dem Vorsprung des jeweils anderen Seitenteils einrastet. Die Vorsprünge und die zugeordneten Aussparungen mit den zugehörigen Anlageflächen und Rasthaken bilden einen Führungsblock, der in eine Aussparung in einem Boden einer Blechkralle eingreift. Die Blechkralle, die das eigentliche Anschlussteil bildet, umfasst die Seitenteile von außen mit Füßen, die vom Boden aus abgewinkelt sind. Zu den Enden der Blechkralle sind an den Füßen längs gerichtete Laschen angeformt, die bei der Montage in entsprechende Nischen des Grundelements umgebogen werden. Zwischen den Füßen sind vom Boden aus in entgegengesetzter Richtung Seitenwände um etwa 90 Grad umgebogen. Die Seitenwände tragen als Gelenkteil einen Lagerstift, der mit den Seitenwänden vernietet ist.

### Offenbarung der Erfindung

Nach der Erfindung weist der Adapter Mittel auf, die zur Halterung und zum Fixieren von drei unterschiedlichen Verbindungselementen geeignet sind. Dadurch können mit dem gleichen Adapter mehrere unterschiedliche Anwendungsfälle abgedeckt werden. Die Verbindungselemente können an dem zum Wischblatt weisenden Ende und des Wischarms angeformt sein oder als separate Bauteile hergestellt und mit den Wischarmen fest verbunden werden.

Gemäß einer Ausgestaltung der Erfindung sind die Mittel zur Halterung und Fixierung der unterschiedlichen Verbindungselemente am Adapter eine zur hinteren Stirnwand weisende Stirnkante der Deckwand, zwei im Bereich der Stirnkante nach hinten weisende Haltenocken, zwei seitlich im Bereich der Stirnkante zur hinteren Stirnwand konkav angeformte Stufen und zwei jeweils auf die beiden Seitenwände in der Nähe der hinteren Stirnwand verteilte Verriegelungseinrichtungen. Dabei weisen die Verriegelungseinrichtungen zweckmäßigerweise Anlageflächen und jeweils eine Schräge auf, die zur vorderen Stirnwand weisen. Somit kann z.B. ein erstes Verbindungselement mit einem u-förmigen Querschnitt mit seinen Seitenwänden die Seitenwände des Adapters teilweise umfassen und mit einem Rand seiner Deckwand an der zur hinteren Stirnwand weisenden Stirnkante der Deckwand des Adapters anliegen und dabei mit seiner Deckwand Haltenocken an der Deckwand des Adapters untergreifen. In der montierten Position können außerdem die Stirnkanten der Seitenwände des Verbindungselement an den Stufen des Adapters anliegen. Diese sind konkav zur hinteren Stirnwand an den Seitenwänden des Adapters angeformt. Ferner sind die zur hinteren Stirnwand des Adapters weisenden Stirnflächen zweier in Längsrichtung verlaufender Führungsborde an den Anlageflächen der Verriegelungseinrichtung des Adapters fixiert.

Während beim ersten Verbindungselement ein seitlich gekröpftes Anschlussprofil zum Wischarm vorgesehen ist, sodass der Wischarm in montierter Position seitlich zum Wischblatt verläuft, ist das Anschlussprofil eines zweiten Verbindungselements in Längsrichtung des Verbindungselements angeordnet, sodass der Wischarm oberhalb des Wischblatts verläuft. Das zweite Verbindungselement besitzt an seiner Frontseite eine Lasche, die zum Wischblatt hin gekröpft ist und bei der Montage unter die Deckwand des Adapters geschoben wird. In der Endposition stützt sich die Lasche stirnseitig an einem Anschlag unterhalb der Deckwand des Adapters ab. Das zweite Verbindungselement wird im Adapter durch einen Vorsprung fixiert, der mit einer Hinterschneidung an einer Schrägen der Verriegelungseinrichtung des Adapters anliegt. Eine dritte, der zweiten ähnliche Verriegelungseinrichtung besitzt einen geraden, etwa senkrecht zur Unterkante in Richtung auf das Wischblatt zulaufenden Anschlag, der sich an einer passenden Anschlagfläche der Verriegelungseinrichtung abstützt.

Die erfindungsgemäße Anschlussvorrichtung eröffnet weitere Möglichkeiten, unterschiedliche Wischarmenden bzw. Verbindungselemente mit dem Anschlusselement des Wischblatts zu verbinden, indem der Adapter Mittel aufweist, die zur Halterung und zum Fixieren von einem Einsatzstück geeignet sind, das zwei Doppelwände mit jeweils einem Zwischenraum besitzt, die durch ein Mittelteil miteinander verbunden sind und die Seitenwände des Adapters auf beiden Seiten mindestens teilweise überdecken. Das Mittelteil ist gegenüber der oberen Begrenzung der Doppelwände zurückgesetzt, sodass die Doppelwände jeweils gegenüber dem Mittelteil einen Überstand bilden. Zwischen diesen können Wischstangen verschiedener Wischarme geführt werden. Ferner hat das Mittelteil einen Längskanal, der zur vorderen Stirnwand offen ist, wobei das Mittelteil ein Stück weit von der Frontseite des Einsatzstücks in Längsrichtung zurückversetzt ist. Durch diese Gestaltung ist es möglich, eine Wischstange mit einem hakenförmigen Ende und einem kleinen Bogen zu montieren, indem ein unterer Schenkel des hakenförmigen Endes durch die stirnseitige Öffnung in den Führungskanal eingreift. In ähnlicher Weise kann eine Wischstange mit einem größeren Bogen an seinem hakenförmigen Ende montiert werden, indem der Bogen die Öffnung des Führungskanals überdeckt und der untere Schenkel an der unteren Seite des Einsatzstücks anliegt.

Bei einer sechsten Art eines Wischarms wird das Verbindungselement durch ein gekröpftes Ende einer Wischstange gebildet. Bei der Montage wird die Wischstange mit dem gekröpften Ende zwischen die Überstände des Einsatzstücks gelegt und in die Öffnung des Adapters eingesetzt. Die Wischstange wird dabei soweit in Richtung der vorderen Stirnwand des Adapters geschoben, bis die Stirnseite der Wischstange an der Innenseite der vorderen Stirnwand anliegt und mit einem Rastloch an einem Rasthaken an der hinteren Stirnwand des Adapters einrastet.

Schließlich können die Anschlussmöglichkeiten der erfindungsgemäßen Anschlussvorrichtung durch eine weitere Variante ergänzt werden, die einen Anschluss nach dem Sidelockprinzip ermöglicht. Dabei weist das Einsatzstück gemäß einer weiteren Ausgestaltung eine quer verlaufende Lagerbohrung zur Aufnahme eines Lagerbolzens eines Verbindungselements auf. Die Lagerbohrung fluchtet mit Lagerbohrungen in den Seitenwänden des Adapters. Die Verbindung zwischen dem Adapter und dem Verbindungselement erfolgt nach dem SidelockPrinzip, wobei eine Brücke mit einem abgewinkelten Ende das Einsatzstück übergreift und somit den Adapter mit dem Einsatzstück in Längsrichtung des Lagerzapfens fixiert. Da der Adapter schwenkbar mit dem Anschlusselement verbunden ist, wird das abgewinkelte Ende der Brücke soweit zum Einsatzteil hingebogen, dass eine Schwenkbewegung in den Lagerzapfen des Verbindungselements vermieden wird. Dabei greift das abgewinkelte Ende der Brücke zweckmäßigerweise in eine Nische, die an der Außenseite der zugeordneten Doppelwand des Einsatzstücks angeordnet ist und gegenüber der Lagerbohrung zur hinteren Stirnwand des Adapters versetzt ist. Grundsätzlich können Lagerbohrungen in beiden Doppelwänden vorgesehen sein und es können auf beiden Außenseiten der Doppelwände Nischen vorgesehen werden, wodurch sich weitere Anwendungsvarianten ergeben. Ist jedoch nur eine Nische vorgesehen, ist es zweckmäßig, dass die Lagerbohrung auf der Seite der Nische aus optischen und strömungstechnischen Gründen geschlossen ist.

Um trotz der zahlreichen Anschlussmöglichkeiten eine flach bauende Anschlussvorrichtung zu erhalten, ist es zweckmäßig, dass das Anschlusselement und der Adapter aus Kunststoff gefertigt sind, wobei der Adapter einen in einer Längsmittelebene verlaufenden Steg besitzt, der in seinem mittleren Bereich quer zur Längsrichtung verlaufende Lagerzapfen trägt. Der Längssteg sowie die Lagezapfen stehen zum Anschlusselement ein Stück weit über die Seitenwände des Adapters vor, wobei der zum Anschlusselement vorstehende Teil des Längsstegs zwischen zwei Anlageflächen geführt ist, die in Längsrichtung verlaufend so zueinander versetzt sind, dass in montierter Position jeweils eine Längsseite des Längsstegs an einer zugeordneten Anlagefläche anliegt, und der Längssteg zur Montage um eine Hochachse um einen Winkel von etwa 45° zwischen den Anlageflächen drehbar ist. Ferner ist die Länge der Lagerzapfen so bemessen, dass diese mit ihren freien Enden in der montierten Position in Lagerbohrungen in den Seitenwänden des Anschlusselements einrasten. Zur leichteren Montage und Zentrierung des Adapters ist der Längssteg an seinen Stirnseiten an Führungsflächen des Anschlusselements radial geführt.

Ferner ist es vorteilhaft, dass das Anschlusselement ein Anschlussteil und ein Grundelement besitzt, das in Längsrichtung in zwei Seitenteile geteilt ist und miteinander zugewandten Längsnuten ein Tragelement umfasst sowie an den einander zugewandten Seiten durch Rastverbindungen miteinander verbunden ist. Die Seitenteile werden zusätzlich zu den Rastverbindungen durch das Anschlussteil seitlich zusammengehalten, indem die Seitenwände des Anschlussteils mit Rastnocken an ihren Innenseiten in Nischen an den Außenseiten der Seitenteile einrasten.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 eine perspektivische Ansicht einer Zusammenstellung einer erfindungsgemäßen Anschlussvorrichtung mit drei unterschiedlichen Verbindungselementen,
Fig. 2 eine perspektivische Ansicht einer erfindungsgemäßen Anschlussvorrichtung während der Montage eines ersten Verbindungselements,

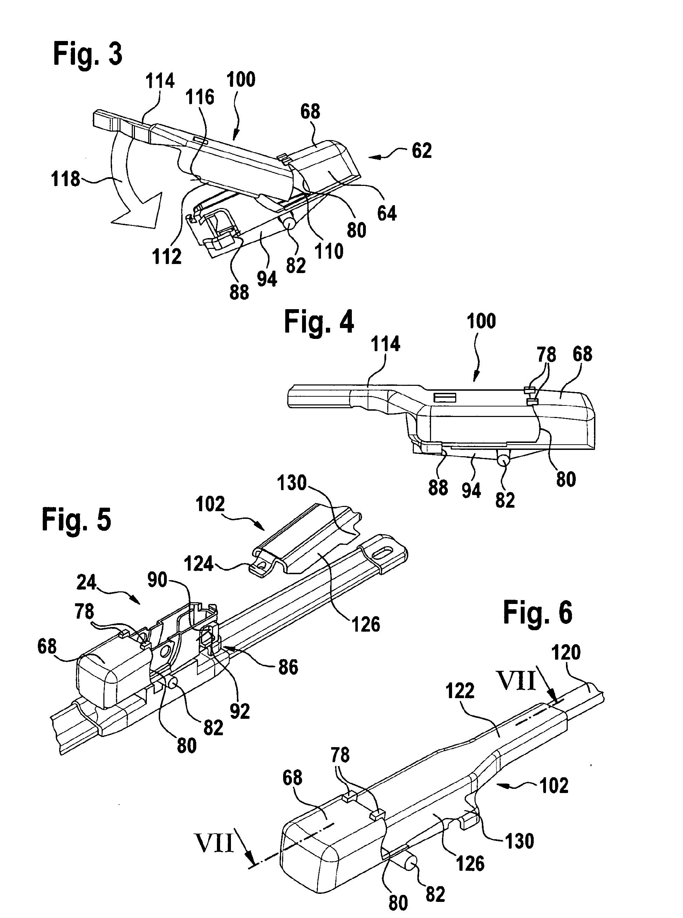

Fig. 3 eine perspektivische Ansicht des ersten Verbindungselements während der Montage mit einem Adapter,
Fig. 4 eine perspektivische Seitenansicht des ersten Verbindungselements an einem Adapter montiert,
Figur 5 eine perspektivische Ansicht einer erfindungsgemäßen Anschlussvorrichtung während der Montage eines zweiten Verbindungselements,
Fig. 6 eine perspektivische Ansicht des an einem Adapter montierten zweiten Verbindungselements,

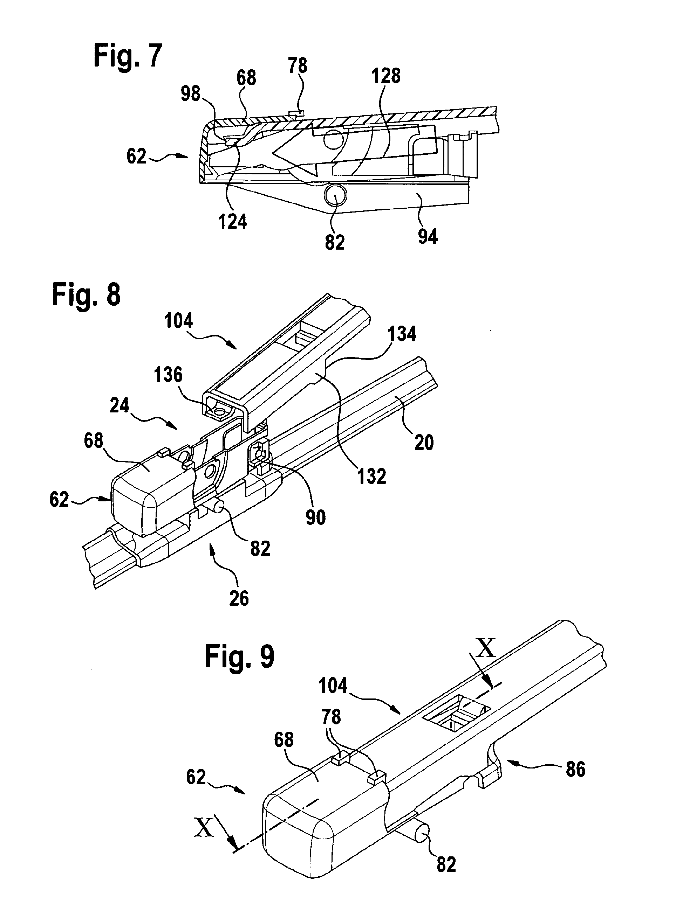

Fig. 7 einen Schnitt entsprechend der Linie VII-VII in Fig. 6,
Fig. 8 eine perspektivische Ansicht einer erfindungsgemäßen Anschlussvorrichtung während der Montage eines dritten Verbindungselements,
Fig. 9 eine perspektivische Ansicht des an einem Adapter montierten dritten Verbindungselements,

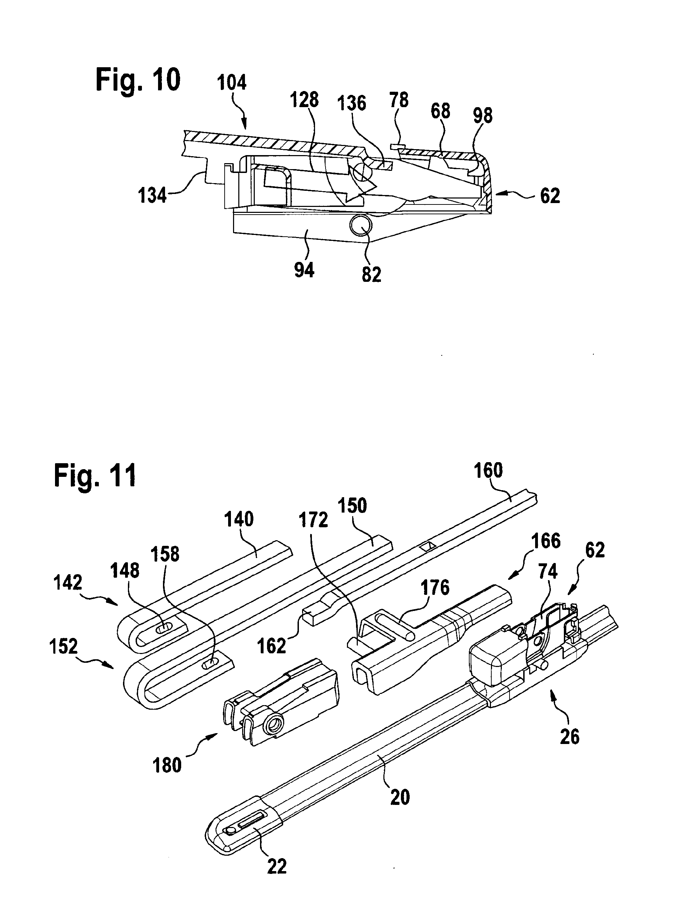

Fig. 10 einen Schnitt entsprechend der Linie X-X Fig. 9,
Fig. 11 eine perspektivische Ansicht einer Zusammenstellung einer erfindungsgemäßen Anschlussvorrichtung mit einem Einsatzstück und vier weiteren unterschiedlichen Verbindungselementen,

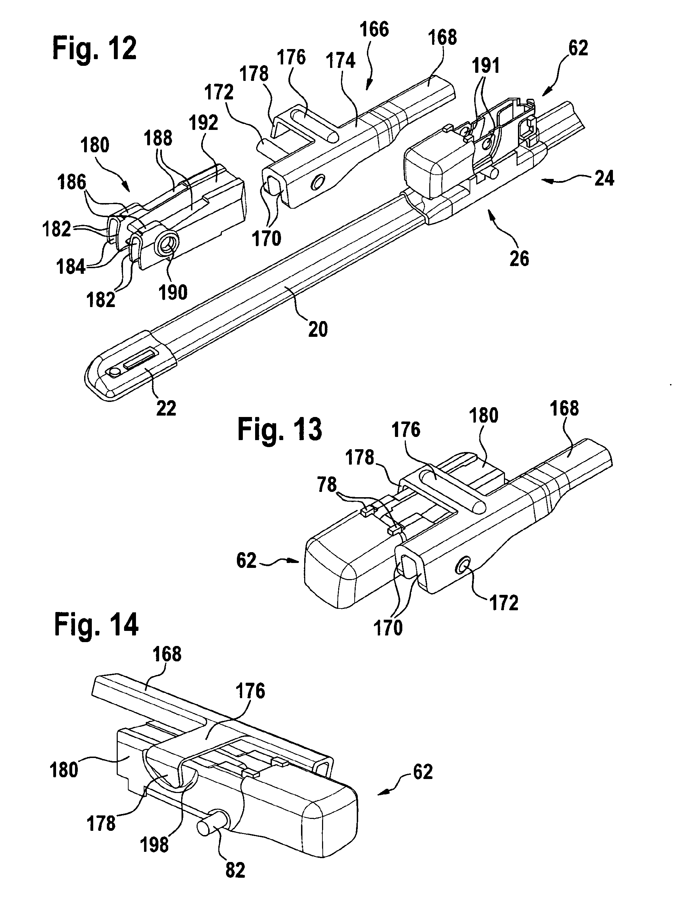

Fig. 12 eine perspektivische Ansicht einer erfindungsgemäßen Anschlussvorrichtung während der Montage eines vierten Verbindungselements,
Fig. 13 eine perspektivische Ansicht des an einem Adapter mit einem Einsatzstück montierten vierten Verbindungselements,
Fig. 14 eine perspektivische Ansicht nach Fig. 13 von einer gegenüberliegenden Seite des Adapters,

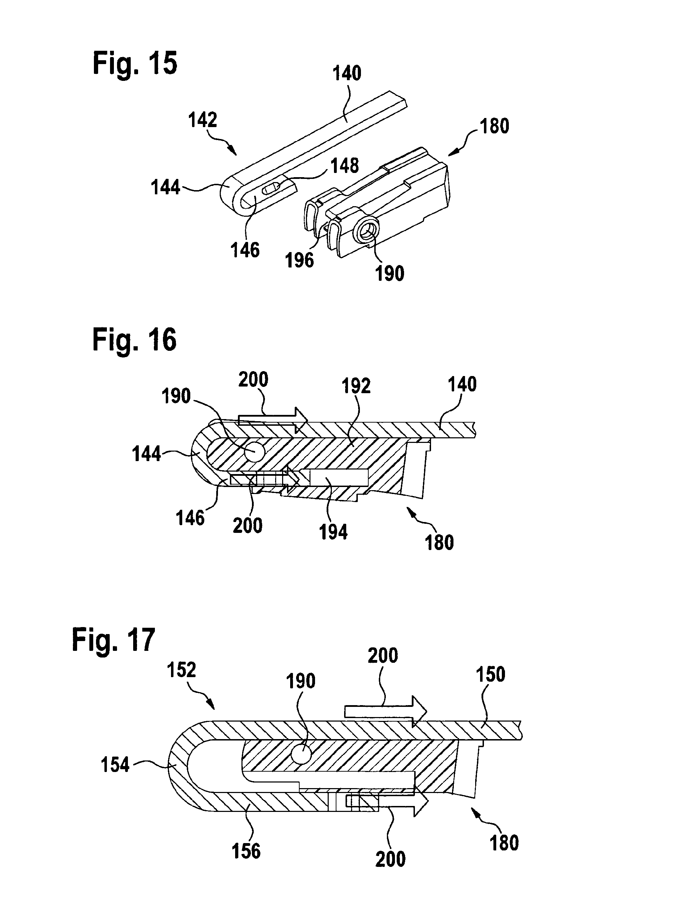

Fig. 15 eine perspektivische Ansicht eines fünften Verbindungselements in Form einer Wischstange mit einem hakenförmigen Ende während der Montage an einem Einsatzstück,
Fig. 16 einen Längsschnitt durch das Einsatzstück,
Fig. 17 eine Variante zu Fig. 16 mit einem sechsten Verbindungselement mit einem größeren hakenförmigen Ende,

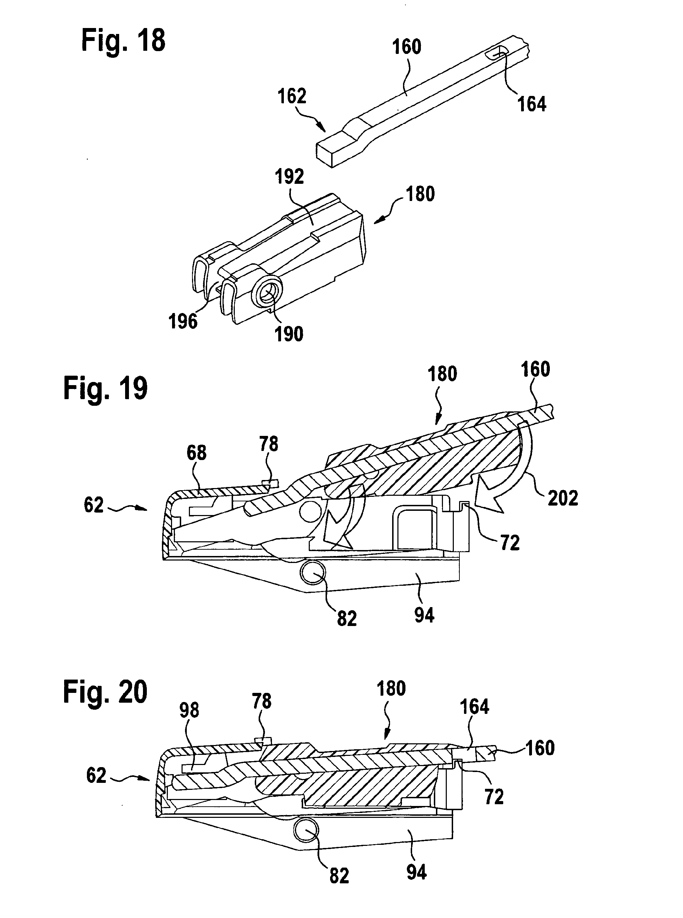

Fig. 18 das Einsatzstück während der Montage eines siebten Verbindungselements in Form eines gekröpften Endes einer Wischstange,
Fig. 19 einen Längsschnitt durch den Adapter während der Montage des Einsatzstücks mit der Wischstange,
Fig. 20 einen Längsschnitt durch den Adapter mit montiertem Einsatzstück und montierter Wischstange und
Fig. 21 eine perspektivische Ansicht einer Zusammenstellung einiger Teile der erfindungsgemäßen Anschlussvorrichtung während der Montage.

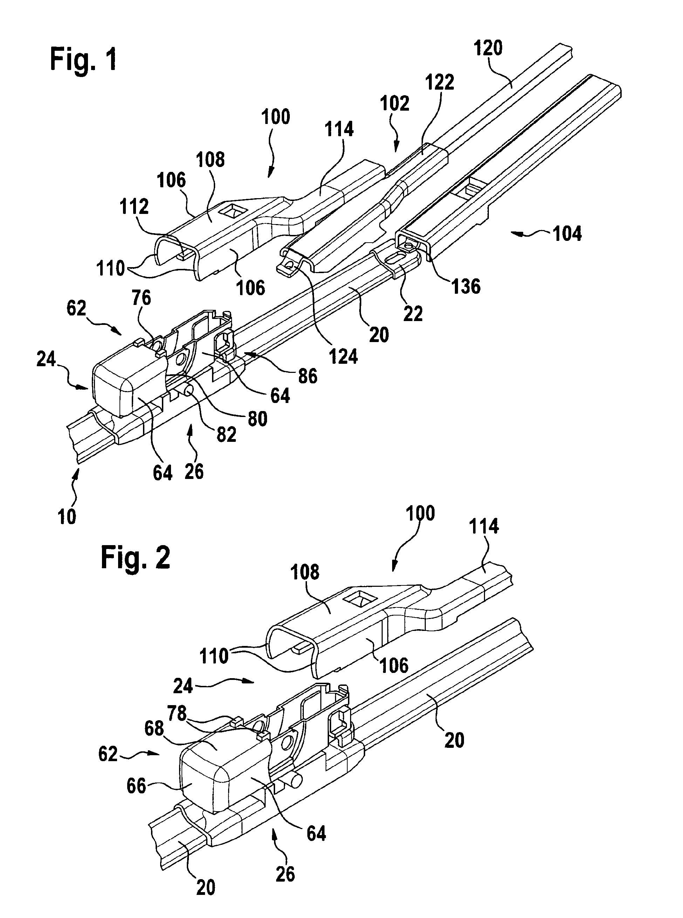

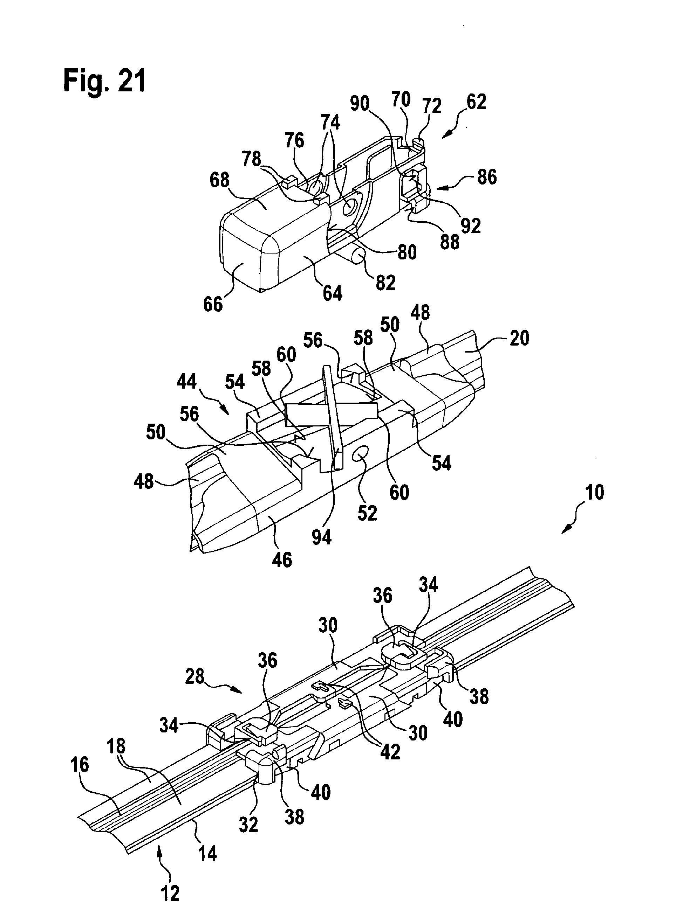

Von einem in Fig. 1 dargestellten Wischblatt 10 sowie den zugeordneten Wischarmen ist nur so viel dargestellt, wie zum Verständnis der Erfindung notwendig ist. Das Wischblatt 10 wie es in Fig. 1 und Fig. 21 dargestellt ist besitzt eine Wischleiste 12 mit einer Wischlippe 14, die in üblicher Weise mittels eines nicht sichtbaren Kippstegs mit einer Kopfleiste 16 verbunden ist. Diese wird von einem Tragelement 18 in Form zweier flacher, vorgebogener Federschienen gehalten, die in Längsnuten der Kopfleiste 16 eingesetzt sind und ein Stück weit aus dieser herausragen. Die vorstehenden Teile des Tragelements 18 greifen in Längsnuten 32 eines zum Anschlusselement 26 einer erfindungsgemäßen Anschlussvorrichtung 24 gehörenden Grundelements 28. Zu beiden Seiten des Anschlusselements 26 sind auf dem Tragelement 18 Spoiler 20 befestigt, die an ihren Enden mit Endkappen 22 abgeschlossen werden.

Das Grundelement 28 ist in Längsrichtung in zwei Seitenteile 30 geteilt. An den einander zugewandten Seiten der Seitenteile 30 besitzen diese jeweils an ihren Enden einen Rasthaken 34, der mit einer Rastvertiefung 36 des jeweils anderen Seitenteils 30 zusammenwirkt. Durch die Rastverbindung 34, 36 werden die Seitenteile 30 zusammengehalten. Zusätzlich wird der Zusammenhalt durch ein Anschlussteil 44 unterstützt, das bei der Montage in Richtung einer Hochachse auf das Grundelement 28 aufgesetzt wird, und mit seinen Seitenwänden 46 die Seitenteile 30 des Grundelements 28 seitlich umfasst. Dabei rasten nicht näher dargestellte Rastnocken in Nischen 40 unterhalb von Verstärkungen 38 der Seitenteile 30 des Grundelements 28 ein. Im mittleren Bereich besitzen die Seitenteile 30 Zentriernocken 42, die die relative Lage des Grundelements 28 zum Anschlussteil 44 sichern.

Während das Grundelement 28 zur Verbindung des Anschlusselements 26 mit dem Tragelement 18 dient, ist der Anschlussteil 44 für die gelenkige Verbindung des Anschlusselements 26 mit einem Adapter 62 bestimmt. Beide Seitenwände 46 des Anschlussteils 44 sind durch eine Deckwand 50 miteinander verbunden, an die sich zu den Enden hin Anschlussprofile 48 für die Spoiler 20 des Wischblatts 10 anschließen können. Die Seitenwände 46 besitzen in ihrem mittleren Bereich überhöhte Teile 54, in denen Lagerbohrungen 52 vorgesehen sind.

Die Seitenwände 64, die durch eine vordere Stirnwand 66 und eine hintere Stirnwand 70 miteinander verbunden sind, bilden einen Rahmen, der im Bereich der vorderen Stirnwand 66 durch eine Deckwand 68 geschlossen ist. Diese ragt ein Stück weit zum mittleren Bereich des Adapters 62 und schließt mit einer geraden Stirnkante 76 ab, an der Haltenocken 78 vorgesehen sind, die zur hinteren Stirnwand 70 weisen. Zwischen der Stirnkante 76 und der hinteren Stirnwand 70 besitzt der Adapter 62 eine Öffnung 74.

Der Adapter 62 besitzt ferner in seiner Längsmittelebene einen Längssteg 94 mit Lagerzapfen 82, die zueinander fluchten und bei der Montage in Lagerbohrungen 52 des Anschlussteils 44 einrasten. Der Längssteg 94 und die Lagerzapfen 82 ragen ein Stück weit über die Seitenwände 64 des Adapters 62 zum Anschlusselement 26 hin vor.

Bei der Montage wird der Adapter 62 um etwa 45° zur Längsrichtung des Wischblatts 10 gedreht und in Richtung einer Hochachse auf das Anschlusselement 26 aufgesetzt. Anschließend wird der Adapter 62 wieder zurückgedreht, bis sein Längssteg 94 in Längsrichtung weist und mit jeweils einer Seitenfläche an Anlageflächen 58 des Anschlussteils 44 anliegt, die ebenfalls in Längsrichtung verlaufen und in Längsrichtung gegeneinander versetzt sind. In dieser Position rasten die Lagerzapfen 82 in die Lagerbohrungen 52 ein. Um das Einrasten zu erleichtern, sind vor den Lagerbohrungen 52 zweckmäßigerweise Kulissen 60 angeordnet, an denen die Stirnseiten der Lagerzapfen 82 entlang gleiten, bis sie in die Lagerbohrungen 52 einrasten. Bei der Drehbewegung des Adapters 62 in die Endposition wird der Adapter 62 an den Stirnflächen des Längsstegs an Führungsflächen 56 des Anschlussteils 44 geführt. Fig. 2 zeigt einen am Wischblatt 10 vormontierten Adapter 62. Es ist klar zu erkennen, dass der Adapter 62 zu beiden Enden hin einen ausreichenden Abstand von den Spoilern 20 und den Anschlussprofilen 48 besitzt, sodass für den Adapter 62 ein ausreichender Schwenkwinkel möglich ist.

Der Adapter 62 besitzt Mittel zum Halten und Fixieren von drei gängigen Verbindungselementen 100, 102 und 104, die mit einem Wischarm fest verbunden sind, indem sie an dem Wischarm angeformt oder als separates Bauteil an dem Wischarm befestigt sind. Ein erstes Verbindungselement 100 besitzt ein u-förmiges Querschnittprofil mit Seitenwänden 106 und einer Deckwand 108. An einer Seitenwand 106 schließt sich ein Anschlussprofil 114 für einen nicht dargestellten Wischarm an. Das Verbindungselement 100 besitzt ferner an den freien Kanten seiner Seitenwände 106 nach innen vorspringende Führungsborde 112, die an ihren Enden Stirnflächen 116 aufweisen. Die zur vorderen Stirnwand 66 des Adapters 62 weisenden Stirnkanten 110 der Seitenwände 106 sind konvex ausgebildet und passen zu konkav geformten Stufen 80 der Seitenwände 64 des Adapters 62.

Bei der Montage wird das Verbindungselement 100 mit seinen Seitenwänden 106 über die Seitenwände 64 des Adapters 62 geschoben, bis die Stirnkanten 110 an den Stufen 80 anliegen und die Deckwand 108 des Verbindungselements 100 an die Stirnkante 76 der Deckwand 68 des Adapters 62 anschließt, wobei Haltenocken 78 an der Deckwand 68 des Adapters 62 die Deckwand 108 des Verbindungselements 100 ein Stück weit übergreifen. Wird nun das Verbindungselement 100 in Richtung eines Pfeils 118 geschwenkt, rasten die zur hinteren Stirnwand 70 weisenden Stirnflächen 116 der Führungsborde 112 an Anlageflächen 88 der Verriegelungseinrichtungen 86 ein, die an den Seitenwänden 64 im Bereich der hinteren Stirnwand 70 angeordnet sind. Somit ist das Verbindungselement 100 in Längsrichtung des Adapters 62 gesichert, während die Sicherung in Richtung einer Hochachse durch die konkaven Stufen 80 in Verbindung mit den konvexen Stirnkanten 110 und den Haltenocken 78 erfolgt.

Das zweite Verbindungselement 102 besitzt einen ähnlichen Aufbau. Es ist über ein Anschlussprofil 122 mit einer Wischstange 120 fest verbunden, wobei das Anschlussprofil 122 sich in der Verlängerung des Verbindungselements 102 erstreckt, sodass die Wischstange 120 oberhalb des Wischblatts 10 verläuft. An der vorderen Stirnseite des Verbindungselements 102 ist eine Lasche 124 angeformt, die gelocht und zum Anschlusselement 26 hin gekröpft ist. Bei der Montage wird die Lasche 124 in Richtung eines Pfeils 128 unter die Deckwand 68 des Adapters 62 geschoben, bis die Stirnkante der Lasche 124 an einem Anschlag 98 des Adapters 62 anstößt und sich dort abstützt. Wird nun das Verbindungselement 102 in die Betriebsposition geschwenkt, rasten Vorsprünge 130 der Seitenwände 126 im Bereich der Verriegelungseinrichtungen 86 an Schrägen 92 ein. Die Schrägen 92 weisen zur vorderen Stirnwand 66 und sichern das Verbindungselement 102 zusätzlich in Richtung einer Hochachse, indem sie in Hinterschnitte der Vorsprünge 130 passen.

Das dritte Verbindungselement 104 ist einstückig an dem Wischarm angeformt. Im Unterschied zum zweiten Verbindungselement 102 besitzt es Vorsprünge 132 mit Anschlägen 134, die etwa senkrecht zur unteren Kante der Seitenwände des Verbindungselements 104 verlaufen, und die sich an Anlageflächen 90 der Verriegelungseinrichtungen 86 abstützen. Im übrigen wird es wie das zweite Verbindungselement 102 montiert, indem seine Lasche 136 unter die Deckwand 68 des Adapters 62 geschoben wird.

Die Anschlussmöglichkeiten des Adapters 62 können durch ein Einsatzstück 180 um vier Varianten erweitert werden. Das Einsatzstück 180 besitzt zwei parallel verlaufende Seitenwände in Form von Doppelwänden 182, die einen Zwischenraum 184 zur Aufnahme der Seitenwände 64 des Adapters 62 bilden. Ein Mittelteil 192 verbindet die inneren Wände der Doppelwände 182 miteinander, wobei es ein Stück weit gegenüber der oberen Kante der Doppelwände 182 zurückspringt. Dadurch werden zu beiden Seiten des Mittelteils 192 Überstände 186 gebildet, zwischen denen Wischstangen 140, 150 und 160 geführt werden können. Ferner besitzt das Mittelteil 192 einen Längskanal 194 mit mindestens einer zur vorderen Stirnwand 66 des Adapters 62 weisenden Öffnung 196. An der Frontseite ist das Mittelteil 192 gegenüber den Doppelwänden 182 ein Stück weit zurückversetzt, sodass genügend Platz bleibt für Verbindungselemente der Wischstangen 140, 150, 160 in Form von hakenförmigen Enden 142, 152 oder eines gekröpften Endes 162.

Das hakenförmige Ende 142 der Wischstange 140 besitzt einen kleineren Bogen 144 als das hakenförmige Ende 152 der Wischstange 150, sodass sein unterer Schenkel 146, der ein Rastloch 148 aufweist, in Richtung der Pfeile 200 in die Öffnung 196 des Längskanals 194 eingefädelt werden kann. Demgegenüber besitzt das hakenförmige Ende 152 einen größeren Bogen 154, wobei sein unterer Schenkel 156 an der Unterseite des Einsatzstücks 180 anliegt. Der untere Schenkel 156 weist ein Rastloch 158 auf.

Die Wischstange 160 mit ihrem gekröpften Ende 162 besitzt ein Rastloch 164. Sie wird mit dem gekröpften Ende 162 unter die Deckwand 68 des Adapters 62 geschoben, bis ihre Stirnkante an der Innenseite der vorderen Stirnwand 66 unterhalb des Anschlags 98 anliegt. Bei einer Schwenkbewegung in Richtung der Pfeile 202 während der Montage rastet das Rastloch 164 an einem Rasthaken 72 an der hinteren Stirnwand 70 des Adapters 62 ein, sodass die Wischstange 160 mit ihrem gekröpften Ende 162 sowohl in Längsrichtung als auch in Richtung einer Hochachse gesichert ist.

Schließlich kann ein Wischarm über ein Verbindungselement 166 nach Art eines Sidelocks mit dem Adapter 62 verbunden werden. Hierzu weist das Einsatzstück 180 in seinen Doppelwänden 182 und im Mittelteil 192 eine quer verlaufende Lagerbohrung 190 auf, die mit Lagerbohrungen 191 in den Seitenwänden 64 des Adapters 62 fluchten. Die Lagerbohrungen 190, 191 dienen zur Aufnahme eines Lagerbolzens 172, der fliegend in Schenkeln 170 eines u-förmigen Profils des Verbindungselements 166 gehalten wird. Die Schenkel 170 sind durch eine Deckwand 174 miteinander verbunden, an die eine parallel zum Lagerbolzen 172 verlaufende Brücke 176 angeformt ist, die zur hinteren Stirnwand 70 des Adapters 62 versetzt ist. Auf der gleichen Seite, in Längsrichtung gesehen, besitzt das Verbindungselement 166 ein Anschlussprofil 168 zum Verbinden mit einem nicht dargestellten Wischarm.

Die Brücke 176 übergreift mit einem abgewinkelten Ende 178 das Einsatzstück 180, wobei sie in die Vertiefungen 188 der Doppelwände 182 eingreift. Das abgewinkelte Ende 178 liegt an der Außenseite des Einsatzstücks 180 an. Es wird gegen die Außenwand gepresst und greift in eine Nische 198 der zugeordneten Doppelwand 182. Dadurch wird verhindert, dass der Adapter 62 um den Lagerbolzen 172 geschwenkt werden kann. Die Schwenkbewegung des Wischblatts 10 relativ zum Wischarm bzw. dessen Verbindungselementen erfolgt ausschließlich über die Lagerbohrungen 52 des Anschlusselements 26 und der Lagerzapfen 82 des Adapters 62.

Somit können durch den erfindungsgemäßen Adapter mit seinem Einsatzstück insgesamt sieben unterschiedliche Verbindungsmöglichkeiten realisiert werden, wobei eine flach bauende vom Design her ansprechende Form erzielt wird.

## Patentansprüche

1. Anschlussvorrichtung (24) zum gelenkigen Verbinden eines mit einem Wischarm fest verbundenen Verbindungselements (100, 102, 104, 142, 152, 162, 166) über einen Adapter (62), der drehfest vom Verbindungselement (100, 102, 104, 142, 152, 162, 166) gehalten wird, mit einem an einem Wischblatt (10) befestigten Anschlusselement (26), wobei zwischen dem Anschlusselement (26) und dem Adapter (62) ein quer zur Längsrichtung des Wischblatts (10) verlaufendes Gelenk (52, 82) vorgesehen ist und der Adapter (62) aus zwei Seitenwänden (64) einer vorderen Stirnwand (66) und einer hinteren Stirnwand (70) einen Rahmen bildet, der im Bereich der vorderen Stirnwand (66) durch eine Deckwand (68) nach oben teilweise abgedeckt ist, sodass zur hinteren Stirnwand (70) eine Öffnung (74) bleibt, **dadurch gekennzeichnet, dass** der Adapter (62) Mittel (76, 78, 80, 86) aufweist, die zur Halterung und zum Fixieren von drei unterschiedlichen Verbindungselementen (100, 102, 104) geeignet sind.

2. Anschlussvorrichtung (24) nach Anspruch 1, **dadurch gekennzeichnet, dass** die Mittel zur Halterung und Fixierung der unterschiedlichen Verbindungselemente (101, 102, 104) am Adapter (62) eine zur hinteren Stirnwand (70) weisende Stirnkante (76), zwei im Bereich der Stirnkante (76) nach hinten weisende Haltenocken (78), zwei seitlich im Bereich der Stirnkante (76) zur hinteren Stirnwand (70) konkav geformte Stufen (80) und zwei jeweils auf die beiden Seitenwände (64) nahe der hinteren Stirnwand (70) verteilte Verriegelungseinrichtungen (86) umfassen.

3. Anschlussvorrichtung (24) nach Anspruch 2, **dadurch gekennzeichnet, dass** die Verriegelungseinrichtungen (86) Anlageflächen (88, 90) und jeweils eine Schräge (92) aufweisen, die zur vorderen Stirnwand (66) weisen.

4. Anschlussvorrichtung (24) nach Anspruch 3, **dadurch gekennzeichnet, dass** ein erstes Verbindungselement (100) mit einem u-förmigen Querschnitt mit seinen Seitenwänden (106) die Seitenwände (64) des Adapters (62) teilweise umfasst, mit einem Rand seiner Deckwand (108) Haltenocken (78) an der Deckwand (68) des Adapters (62) untergreift und in der montierten Position mit Stirnkanten (110) seiner Seitenwände (106) an der konkav zur hinteren Stirnwand (70) geformten Stufe (80) anliegt und mit Stirnflächen (116) zweier Führungsborde (112) an den Anlageflächen (88) der Verriegelungseinrichtung (86) des Adapters (62) fixiert ist.

5. Anschlussvorrichtung (24) nach Anspruch 3, **dadurch gekennzeichnet, dass** das zweite und dritte Verbindungselement (102, 104) an ihren Frontseiten jeweils eine Lasche (124, 136) besitzen, die zum Wischblatt (10) hin gekröpft sind und die Deckwand (68) des Adapters (62) untergreifen sowie sich in Längsrichtung an einem Anschlag (98) des Adapters (62) abstützen, während Vorsprünge (130) der Seitenwände (126) des Verbindungselements (102, 104) im montierten Zustand an den Anschlagflächen (90) und gegebenenfalls an den sich daran zum Wischblatt (10) hin anschließenden Schrägen (92) der Verriegelungseinrichtung (86) verrastet sind.

6. Anschlussvorrichtung (24) nach Anspruch 1, **dadurch gekennzeichnet, dass** der Adapter (62) Mittel (72, 76, 78, 80, 86, 191) aufweist, die zur Halterung und zum Fixieren von einem Einsatzstück (180) geeignet sind, das zwei Doppelwände (182) mit jeweils einem Zwischenraum (184) besitzt, die durch ein Mittelteil (192) miteinander verbunden sind und die Seitenwände (64) des Adapters (62) auf beiden Seiten mindestens teilweise überdecken, wobei das Mittelteil (192) gegenüber der oberen Begrenzung der Doppelwände (182) zurückgesetzt ist, sodass die Doppelwände (182) jeweils einen Überstand (186) bilden, und wobei das Mittelteil (192) einen Längskanal (194) hat, der zur vorderen Stirnwand (66) offen ist, und das Mittelteil (192) ein Stück weit von der Frontseite des Einsatzstücks (180) in Längsrichtung zurückversetzt ist.

7. Anschlussvorrichtung (24) nach Anspruch 1 oder 6, **dadurch gekennzeichnet, dass** der Adapter (62) Mittel (72, 76, 78, 80, 86, 191) aufweist, die zur Halterung und zum Fixieren von einem Einsatzstück (180) geeignet sind, das zwei Doppelwände (182) mit jeweils einem Zwischenraum (184) besitzt, die durch ein Mittelteil (192) miteinander verbunden sind und die. Seitenwände (64) des Adapters (62) auf beiden Seiten mindestens teilweise überdecken, wobei das Mittelteil (192) gegenüber der oberen Begrenzung der Doppelwände (182) zurückgesetzt ist, sodass die Doppelwände (182) jeweils einen Überstand (186) bilden, mit einer Vertiefung (188), und dass das Einsatzstück (180) eine quer verlaufende Lagerbohrung (190) aufweist, die mit Lagerbohrungen (191) in den Seitenwänden (64) des Adapters (62) fluchten.

8. Anschlussvorrichtung (24) nach Anspruch 7, **dadurch gekennzeichnet, dass** mindestens eine Doppelwand (182) an ihrer Außenseite eine Nische (198) aufweist, die gegenüber der Lagerbohrung (190) zu hinteren Stirnwand (70) des Adapters (62) versetzt ist.

9. Anschlussvorrichtung (24) nach Anspruch 8, **dadurch gekennzeichnet, dass** die Lagerbohrung (190) auf der Seite der Nische (198) geschlossen ist.

10. Anschlussvorrichtung (24) nach einem der vorhergehenden Ansprüche, **dadurch gekennzeichnet, dass** das Anschlusselement (26) und der Adapter (62) aus Kunststoff gefertigt sind, wobei der Adapter (62) einen in einer Längsmittelebene verlaufenden Längssteg (94) besitzt, der in seinem mittleren Bereich einen quer zur Längsrichtung verlaufenden Lagerbolzen (82) trägt, und dass der Längssteg (94) sowie der Lagerbolzen (82) zum Anschlusselement (26) ein Stück weit über die Seitenwände (64) des Adapters (62) vorstehen, wobei der zum Anschlusselement (26) vorstehende Teil des Längsstegs (94) zwischen zwei Anlageflächen (58) geführt ist, die in Längsrichtung verlaufen und zueinander so versetzt sind, dass in montierter Position jeweils eine Längsseite des Längsstegs (94) an einer Anlagefläche (58) anliegt und der Längssteg (94) zur Montage um eine Hochachse um einen Winkel von ca. 45° zwischen den Anlageflächen (58) drehbar ist, und dass die Länge des Lagerbolzens (82) so bemessen ist, dass er mit seinen beiden Enden in der montierten Position in Lagerbohrungen (52) in den Seitenwänden (46) des Anschlusselements (26) einrastet.

11. Anschlussvorrichtung (24) nach Anspruch 10, **dadurch gekennzeichnet, dass** der Längssteg (94) an seinen Stirnseiten durch Führungsflächen (56) des Anschlusselements (26) radial geführt ist.

12. Anschlussvorrichtung (24) nach Anspruch 10 oder 11, **dadurch gekennzeichnet, dass** das Anschlusselement (26) einen Anschlussteil (44), an dem Lagerbohrungen (52) und Anlageflächen (58) angeordnet sind, und ein Grundelement (28) besitzt, das in Längsrichtung in zwei Seitenteile (30) geteilt ist und mit einander zugewandten Längsnuten (32) ein Tragelement (18) umfasst, wobei die Seitenteile (30) an den einander zugewandten Seiten durch Rastverbindungen (34, 36) miteinander verbunden sind.

13. Anschlussvorrichtung (24) nach einem der Ansprüche 10 bis 12, **dadurch gekennzeichnet, dass** die Seitenteile (30) zusätzlich zu den Rastverbindungen (34, 36) durch das Anschlussteil (44) seitlich zusammengehalten werden, indem die Seitenwände (46) des Anschlussteils (44) mit Rastnocken an ihren Innenseiten in Nischen (40) an den Außenseiten der Seitenteile (30) einrasten.

## Claims

1. Connecting apparatus (24) for hinging a joining element (100, 102, 104, 142, 152, 162, 166), which is rigidly connected to a wiper arm, via an adapter (62), which is held non-rotatably by the joining element (100, 102, 104, 142, 152, 162, 166), to a connecting element (26) fastened to a wiper blade (10), wherein a joint (52, 82) running transversely with respect to the longitudinal direction of the wiper blade (10) is provided between the connecting element (26) and the adapter (62), and the adapter (62) consisting of two side walls (64), a front end wall (66) and a rear end wall (70) forms a frame which is partially covered upwards in the region of the front end wall (66) by a top wall (68) such that an opening (74) remains with respect to the rear end wall (70), **characterized in that** the adapter (62) has means (76, 78, 80, 86) which are suitable for securing and for fixing three different joining elements (100, 102, 104).

2. Connecting apparatus (24) according to Claim 1, **characterized in that** the means for securing and fixing the different joining elements (101, 102, 104) on the adapter (62) comprise an end edge (76) pointing towards the rear end wall (70), two holding cams (78) pointing rearwards in the region of the end edge (76), two steps (80) shaped concavely with respect to the rear end wall (70) laterally in the region of the end edge (76) and two locking devices (86) distributed one to each of the two side walls (64) in the vicinity of the rear end wall (70).

3. Connecting apparatus (24) according to Claim 2, **characterized in that** the locking devices (86) have bearing surfaces (88, 90) and both have a slope (92), the slopes pointing towards the front end wall (66).

4. Connecting apparatus (24) according to Claim 3, **characterized in that** a first joining element (100) having a U-shaped cross section partially surrounds, by means of the side walls (106) thereof, the side walls (64) of the adapter (62), engages by means of an edge of the top wall (108) thereof under holding cams (78) on the top wall (68) of the adapter (62) and, in the fitted position, bears with end edges (110) of the side walls (106) thereof against the step (80), which is shaped concavely with respect to the rear end wall (70), and is fixed with end surfaces (116) of two guide flanges (112) on the bearing surfaces (88) of the locking device (86) of the adapter (62).

5. Connecting apparatus (24) according to Claim 3, **characterized in that** the second and third joining elements (102, 104) both have a tab (124, 136) on the front sides thereof, the tabs being bent towards the wiper blade (10) and engaging under the top wall (68) of the adapter (62) and being supported in the longitudinal direction on a stop (98) of the adapter (62) while, in the fitted state, projections (130) of the side walls (126) of the connecting element (102, 104) are latched on the stop surfaces (90) and optionally on the slopes (92) of the locking device (86), which slopes adjoin said stop surfaces towards the wiper blade (10).

6. Connecting apparatus (24) according to Claim 1, **characterized in that** the adapter (62) has means (72, 76, 78, 80, 86, 191) which are suitable for securing and for fixing an insert (180) which has two double walls (182), each with an intermediate space (184), which double walls are connected to each other by a central part (192) and at least partially cover the side walls (64) of the adapter (62) on both sides, wherein the central part (192) is set back from the upper boundary of the double walls (182) such that the double walls (182) each form a projecting length (186), and wherein the central part (192) has a longitudinal channel (194) which is open with respect to the front end wall (66), and the central part (192) is set back for a distance from the front side of the insert (180) in the longitudinal direction.

7. Connecting apparatus (24) according to Claim 1 or 6, **characterized in that** the adapter (62) has means (72, 76, 78, 80, 86, 191) which are suitable for securing and for fixing an insert (180) which has two double walls (182), each with an intermediate space (184), which double walls are connected to each other by a central part (192) and at least partially cover the side walls (64) of the adapter (62) on both sides, wherein the central part (192) is set back from the upper boundary of the double walls (182) such that the double walls (182) each form a projecting length (186), with a depression (188), and **in that** the insert (180) has a bearing bore (190) running transversely and aligned with bearing bores (191) in the side walls (64) of the adapter (62).

8. Connecting apparatus (24) according to Claim 7, **characterized in that** the outer side of at least one double wall (182) has a recess (198) which is offset in relation to the bearing bore (190) towards the rear end wall (70) of the adapter (62).

9. Connecting apparatus (24) according to Claim 8, **characterized in that** the bearing bore (190) is closed on the side of the recess (198).

10. Connecting apparatus (24) according to one of the preceding claims, **characterized in that** the connecting element (26) and the adapter (62) are manufactured from plastic, wherein the adapter (62) has a longitudinal web (94) which runs in a longitudinal central plane and, in the central region thereof, bears a bearing bolt (82) running transversely with respect to the longitudinal direction, and **in that** the longitudinal web (94) and the bearing bolt (82) protrude with respect to the connecting element (26) for a distance over the side walls (64) of the adapter (62), wherein that part of the longitudinal web (94) which protrudes with respect to the connecting element (26) is guided between two bearing surfaces (58) which run in the longitudinal direction and are offset with respect to each other in such a manner that, in the fitted position, one longitudinal side of the longitudinal web (94) bears in each case against a bearing surface (58) and, for installation, the longitudinal web (94) is rotatable about a vertical axis through an angle of approx. 45° between the bearing surfaces (58), and **in that** the length of the bearing bolt (82) is dimensioned in such a manner that, in the fitted position, said bearing bolt latches at both ends thereof in bearing bores (52) in the side walls (46) of the connecting element (26).

11. Connecting apparatus (24) according to Claim 10, **characterized in that** the longitudinal web (94) is guided radially at the end sides thereof by guide surfaces (56) of the connecting element (26).

12. Connecting apparatus (24) according to Claim 10 or 11, **characterized in that** the connecting element (26) has a connecting part (44), on which bearing bores (52) and bearing surfaces (58) are arranged, and a base element (28) which is divided in the longitudinal direction into two side parts (30) and, by means of mutually facing longitudinal grooves (32), surrounds a supporting element (18), wherein the side parts (30) are connected to each other on the mutually facing sides by means of latching connections (34, 36).

13. Connecting apparatus (24) according to one of Claims 10 to 12, **characterized in that** the side parts (30) are held together laterally by the connecting part (44) in addition to the latching connections (34, 36) by the side walls (46) of the connecting part (44) latching by means of latching cams on the inner sides thereof into recesses (40) on the outer sides of the side parts (30).

## Revendications

1. Dispositif de raccordement (24) destiné à relier de manière articulée un élément de liaison (100, 102, 104, 142, 152, 162, 166) solidaire d'un bras d'essuie-glace par le biais d'un adaptateur (62), qui est maintenu de manière solidaire en rotation par l'élément de liaison (100, 102, 104, 142, 152, 162, 166), comprenant un élément de raccordement (26) fixé à un balai d'essuie-glace (10), entre l'élément de raccordement (26) et l'adaptateur (62) étant prévue une articulation (52, 82) s'étendant transversalement à la direction longitudinale du balai d'essuie-glace (10) et l'adaptateur (62), constitué de deux parois latérales (64), d'une paroi frontale avant (66) et d'une paroi frontale arrière (70), formant un cadre qui est recouvert en partie vers le haut dans la région de la paroi frontale avant (66) par une paroi de recouvrement (68), de telle sorte qu'une ouverture (74) subsiste vers la paroi frontale arrière (70), **caractérisé en ce que** l'adaptateur (62) présente des moyens (76, 78, 80, 86) qui sont prévus pour retenir et pour fixer trois éléments de raccordement (100, 102, 104) différents.

2. Dispositif de raccordement (24) selon la revendication 1, **caractérisé en ce que** les moyens pour retenir et fixer les différents éléments de liaison (101, 102, 104) à l'adaptateur (62) présentent une arête frontale (76) tournée vers la paroi frontale arrière (70), deux cames de retenue (78) tournées vers l'arrière dans la région de l'arête frontale (76), deux gradins (80) formés de manière concave latéralement dans la région de l'arête frontale (76) par rapport à la paroi frontale arrière (70) et deux dispositifs de verrouillage (86) répartis à chaque fois sur les deux parois latérales (64) à proximité de la paroi frontale arrière (70).

3. Dispositif de raccordement (24) selon la revendication 1, **caractérisé en ce que** les dispositifs de verrouillage (86) présentent des surfaces d'appui (88, 90) et à chaque fois un biseau (92), lesquels sont tournés vers la paroi frontale avant (66).

4. Dispositif de raccordement (24) selon la revendication 3, **caractérisé en ce qu'**un premier élément de liaison (100) entoure en partie avec une section transversale en forme de U avec ses parois latérales (106) les parois latérales (64) de l'adaptateur (62), vient en prise par le dessous avec un bord de sa paroi de recouvrement (108) avec des cames de retenue (78) au niveau de la paroi de recouvrement (68) de l'adaptateur (62), et dans la position montée, s'applique avec des arêtes frontales (110) de ses parois latérales (106) contre le gradin (80) formé de manière concave par rapport à la paroi frontale arrière (70) et est fixé avec des surfaces frontales (116) de deux bords de guidage (112) sur les surfaces d'appui (88) du dispositif de verrouillage (86) de l'adaptateur (62).

5. Dispositif de raccordement (24) selon la revendication 3, **caractérisé en ce que** le deuxième et le troisième élément de liaison (102, 104) possèdent, au niveau de leurs côtés frontaux, à chaque fois une patte (124, 136), lesquelles sont coudées vers le balai d'essuie-glace (10) et viennent en prise par le dessous avec la paroi de recouvrement (68) de l'adaptateur (62) et s'appuient aussi dans la direction longitudinale contre une butée (98) de l'adaptateur (62), tandis que des saillies (130) des parois latérales (126) de l'élément de liaison (102, 104) sont encliquetées dans l'état monté sur les surfaces de butée (90) et éventuellement sur les biseaux (92) du dispositif de verrouillage (86) se raccordant à celles-ci en direction du balai d'essuie-glace (10).

6. Dispositif de raccordement (24) selon la revendication 1, **caractérisé en ce que** l'adaptateur (62) présente des moyens (72, 76, 78, 80, 86, 191) qui sont prévus pour retenir et fixer un élément d'insertion (180), lequel possède deux doubles parois (182) avec à chaque fois un espace intermédiaire (184), lesquelles sont reliées l'une à l'autre par une partie centrale (192) et recouvrent au moins en partie les parois latérales (64) de l'adaptateur (62) des deux côtés, la partie centrale (192) étant en retrait par rapport à la limite supérieure des doubles parois (182), de telle sorte que les doubles parois (182) forment à chaque fois une avancée (186), et la partie centrale (192) présentant un canal longitudinal (194) qui est ouvert vers la paroi frontale avant (66), et la partie centrale (192) étant en retrait à quelque distance du côté frontal de l'élément d'insertion (180) dans la direction longitudinale.

7. Dispositif de raccordement (24) selon la revendication 1 ou 6, **caractérisé en ce que** l'adaptateur (62) présente des moyens (72, 76, 78, 80, 86, 191) qui sont prévus pour retenir et fixer un élément d'insertion (180) qui possède deux doubles parois (182) avec à chaque fois un espace intermédiaire (184), lesquelles sont reliées l'une à l'autre par une partie centrale (192) et recouvrent au moins en partie les parois latérales (64) de l'adaptateur (62) des deux côtés, la partie centrale (192) étant en retrait par rapport à la limite supérieure des doubles parois (182), de telle sorte que les doubles parois (182) forment à chaque fois une avancée (186), avec un renfoncement (188), et **en ce que** l'élément d'insertion (180) présente un alésage de palier (190) s'étendant transversalement, lequel est en affleurement avec des alésages de palier (191) dans les parois latérales (64) de l'adaptateur (62).

8. Dispositif de raccordement (24) selon la revendication 7, **caractérisé en ce qu'**au moins une double paroi (182) présente au niveau de son côté extérieur une niche (198), qui est décalée par rapport à l'alésage de palier (190) vers la paroi frontale arrière (70) de l'adaptateur (62).

9. Dispositif de raccordement (24) selon la revendication 8, **caractérisé en ce que** l'alésage de palier (190) est fermé du côté de la niche (198).

10. Dispositif de raccordement (24) selon l'une quelconque des revendications précédentes, **caractérisé en ce que** l'élément de raccordement (26) et l'adaptateur (62) sont fabriqués en plastique, l'adaptateur (62) possédant une nervure longitudinale (94) s'étendant dans un plan médian longitudinal, laquelle nervure longitudinale porte dans sa région centrale un boulon de palier (82) s'étendant transversalement à la direction longitudinale, et **en ce que** la nervure longitudinale (94) ainsi que le boulon de palier (82) dépassent quelque peu au-delà des parois latérales (64) de l'adaptateur (62) par rapport à l'élément de raccordement (26), la partie de la nervure longitudinale (94) dépassant par rapport à l'élément de raccordement (26) étant guidée entre deux surfaces d'appui (58), qui s'étendent dans la direction longitudinale et sont décalées l'une par rapport à l'autre de telle sorte que dans la position montée, un côté longitudinal respectif de la nervure longitudinale (94) s'applique contre une surface d'appui (58) et que la nervure longitudinale (94) puisse tourner d'un angle d'environ 45° autour d'un axe vertical entre les surfaces d'appui (58) en vue du montage, et **en ce que** la longueur du boulon de palier (82) est dimensionnée de telle sorte qu'il s'encliquète avec ses deux extrémités dans la position montée dans les alésages de palier (52) dans les parois latérales (46) de l'élément de raccordement (26).

11. Dispositif de raccordement (24) selon la revendication 10, **caractérisé en ce que** la nervure longitudinale (94) est guidée radialement au niveau de ses côtés frontaux par des surfaces de guidage (56) de l'élément de raccordement (26).

12. Dispositif de raccordement (24) selon la revendication 10 ou 11, **caractérisé en ce que** l'élément de raccordement (26) possède une partie de raccordement (44) sur laquelle sont disposés des alésages de palier (52) et des surfaces d'appui (58), et un élément de base (28) qui est divisé dans la direction longitudinale en deux parties latérales (30) et comprend, avec des rainures longitudinales tournées l'une vers l'autre (32), un élément de support (18), les parties latérales (30) étant reliées l'une à l'autre par des liaisons par encliquetage (34, 36) au niveau des côtés tournés l'un vers l'autre.

13. Dispositif de raccordement (24) selon l'une quelconque des revendications 10 à 12, **caractérisé en ce que** les parties latérales (30) sont maintenues ensemble latéralement en plus des liaisons par encliquetage (34, 36) par la partie de raccordement (44), **en ce que** les parois latérales (46) de la partie de raccordement (44) s'encliquètent avec des cames d'encliquetage au niveau de leurs côtés intérieurs dans des niches (40) au niveau des côtés extérieurs des parties latérales (30).
